# EUROPEAN PATENT SPECIFICATION

(11) **EP 4 047 344 B1**
(45) Date of publication and mention of the grant of the patent: **28.08.2024**
(21) Application number: 21158241.6
(22) Date of filing: 19.02.2021
(51) Int. Cl.: G01N 1/36, G01N 23/046, G01N 23/083

(54) **A METHOD AND DEVICE FOR 3D ANALYZES OF A PARTICULATE MATERIAL**
VERFAHREN UND VORRICHTUNG FÜR 3D-ANALYSEN EINES TEILCHENFÖRMIGEN MATERIALS
PROCÉDÉ ET DISPOSITIF D'ANALYSE 3D D'UN MATÉRIAU PARTICULAIRE

(43) Date of publication of application: 24.08.2022
(73) Proprietor: Helmholtz-Zentrum Dresden - Rossendorf e.V., 01328 Dresden (DE)
(72) Inventor: DA ASSUNCAO GODINHO, Jose Ricardo, 01328 Dresden (DE); PEREIRA, Lucas, 01328 Dresden (DE)
(74) Representative: Müller Hoffmann & Partner

(56) References cited:
- EP-A1- 0 301 028
- DITSCHERLEIN RALF ET AL: "Preparation techniques for micron-sized particulate samples in X-ray microtomography", POWDER TECHNOLOGY, ELSEVIER, BASEL (CH), vol. 360, 6 June 2019 (2019-06-06), pages 989 - 997, XP085953886, ISSN: 0032-5910, [retrieved on 20190606], DOI: 10.1016/J.POWTEC.2019.06.001
- CLAUDIA REDENBACH ET AL: "Characterization of Powders using Micro Computed Tomography", PARTICLE AND PARTICLE SYSTEMS CHARACTERIZATION, vol. 28, no. 1-2, 1 April 2011 (2011-04-01), DE, pages 3 - 12, XP055425965, ISSN: 0934-0866, DOI: 10.1002/ppsc.200900088
- FU X ET AL: "Investigation of particle packing in model pharmaceutical powders using X-ray microtomography and discrete element method", POWDER TECHNOLOGY, ELSEVIER, BASEL (CH), vol. 167, no. 3, 26 September 2006 (2006-09-26), pages 134 - 140, XP027983798, ISSN: 0032-5910, [retrieved on 20060926]

## Description

The present invention is concerned with methods for analyzing particulate materials and with analysis devices capable to carry out the methods or parts of them.

Classification of the particle content of a particulate material is an important task in various fields of industry and technology. There is a wide variety of possible applications, ranging e.g. from the analysis of geological samples (mining, wasted soil detection, etc.) to the identification of valuable materials in waste. Usually, a single sample is divided and analyzed by different physical, chemical and/or phase-identification methods to determine all types of materials present (e.g. a mineralogical analysis of rocks or the like), their concentrations, and the composition of the particles in the sample.

Of particular interest are here analysis methods that allow a determination of different particle concentrations and compositions (also called particle phases) without destruction of the particles, as e.g. necessary for mass spectroscopy or most chemical analysis methods. One such destruction free analysis method is the usage of tomography, i.e. the reconstruction of a three-dimensional image of an object from a plurality of sectional images through the object obtained by irradiating the object with suitable radiation. Such three-dimensional image based tomographic techniques (e.g. such as positron emission tomography, magnetic resonance and computed tomography at different length scales and using any type of radiation, e.g. neutron, electron and X-ray) enable non-invasive three-dimensional characterization of objects.

Oen example of such a method is described in "Preparation techniques for micron-sized particulate samples in X-ray microtomography" by Ditscherlein et al. (Powder Technology, Elsevier, Basel (CH), vol. 360, 06.06.2019, p. 989-997).

However, in commonly known tomographic analysis methods there is a problem of misclassification of voxels of the obtained three-dimensional image, and of inaccurate phase quantification based on the greyscale values of these voxels. This inaccuracy originates from physical limitations of the used three-dimensional imaging techniques that cause artefacts in the resulting image. These artefacts lead to an unrealistic representation of particulate materials by the voxelized greyscale images.

In particular, using such tomography the internal three-dimensional microstructure of a sample can be represented by voxelized images where the greyscale value of a voxel, i.e. a three-dimensional unit cell of the image, is, in principle, a function of the electron density (chemical composition and density, i.e. of the particle phase) in the corresponding volume in space.

This ideal and precise correlation of greyscale values vs. electron density is however not obtained in practice due to several physical limitations of three-dimensional imaging techniques:
1) Beam hardening, i.e. the change of beam properties during traversal of an imaged object, like e.g. the shift of a beam's energy composition to higher energies in X-ray CT imaging, broadens the range of greyscale values that correspond to a phase depending on the position within a sample and the neighbor phases. Corrections to beam hardening can be applied at the reconstruction stage, although the correction is applied to the entire sample independently of its heterogeneities (see e.g. KR 101 460 615 B1, US 7 782 996,
   CN 102 768 759 B, US 10 311 606). Optimized corrections can also be applied to subvolumes of the reconstructed image for simple and known systems such as the ones used in medicine (US 10 194 879, US 10 297 048).
2) In the presence of a partial volume effect, i.e. the presence of an object or material boundary within a voxel and the corresponding averaging over greyscale values, the greyscale value proportionally represents the attenuation or absorption coefficient of all phases within a voxel. To deal with this problem most available solutions apply minimization functions to gradients in either the radiographs before reconstruction or to the three-dimensional image after reconstruction (US 9 256 967, US 8 090 169). This however may eliminate real gradients not caused by partial volume effect, and since the minimization function is specific to each interphase, the same function cannot be applied to the entire image accurately, especially in the analysis of complex materials.
3) Cone beam blurriness results in blurred interfaces and can affect at least three to five voxels at the edge of a region. Here, the corrections used for partial volume effects can also be applied. Since cone beam blurriness depends on the type of scanner and may vary over time depending on the maintenance of the source, the application of universal solutions for a given system is limited. In this regard it is known to use collimators to make the X-ray beam more parallel (US 5 970 112).

Phase segmentation from a three-dimensional image containing a combination of the artefacts described above is typically done by applying some threshold to the greyscale values and/or to the gradients of the greyscale values. For example, watershed algorithms can be used to obtain a threshold directly from a histogram of grayscale values of the entire three-dimensional image. Some threshold and watershed methods can be defined locally by using information from the greyscale value of neighboring voxels, which minimizes the effect of sample heterogeneity. Artificial intelligence can also enhance segmentation if training data is available. Definition and identification of phases can also be done before reconstructing the image (US 8 090 169, US 8 416 913).

Classification of the segmented phases requires preliminary knowledge of which phases are present in the sample, since the greyscale values are relative and depend on the sample composition as well as scanning and reconstruction parameters. The range of greyscale values that can be attributed to specific phases can be identified by correlation with other imaging techniques or by calibration with a standard material. However, additional information about the sample and or particles therein cannot be used in the classification process.

The above image reconstruction artefacts pose therefore severe problems for a tomography-based particle phase classification. In particular, optimizing beam hardening corrections is very time consuming if applied to each particle and to each heterogeneous region of the sample. The beam hardening correction that is typically applied to the entire image may reduce the effect in some regions and overdo it in other regions. Further, partial volume effect corrections may eliminate real gradients not caused by the effect. Additionally, gradient minimization functions are specific to each interphase, thus the same function cannot be applied to the entire image accurately, especially for complex samples. Since cone beam blurriness depends on the type of scanner and on the maintenance of the source, this effect is specific for each user and varies over time. Thus, no universal fix exists.

The variety of artefacts and the difficulty to adjust each solution to the physical limitations of the techniques makes it impossible to generate a perfect three-dimensional representation of a sample, especially if particles and/or grains are close to the voxel resolution.

In addition, further problems arise due to the need to segment the image, i.e. to attribute each voxel to a specific phase using greyscale values, in order to quantify the properties of particles from the three-dimensional image. Since the greyscale values are already affected by the aforementioned problems, the following additional problems are expected to be caused by the segmentation:

4) Wrong phase classification: Typically, to define the boundaries of a phase some criteria or set of criteria based on the greyscale values of the voxels are used, e.g. greyscale values and/or gradients. However, since the greyscale values of voxels are affected by the above problems, the ranges of greyscale values that actually belong to one phase broaden. This can lead to an overlap of greyscale value ranges of different phases. That is, if a voxel corresponding to one phase is affected by one of the above problems, its greyscale value can also be matched to another phase and might be wrongly segmented to this phase. Additionally, voxels with greyscale values not matching the ranges defined for any phase might be lost, such as e.g. small grains, which reduces the detection limit of the technique.

5) Phase overestimation and underestimation: Segmentation implies that every voxel in an image is labelled to belong to some specific phase, including voxels containing two or more phases and showing therefore a partial volume effect. That means, at interphases the volume of a phase on one side of the boundary is overestimated relatively to the phase on the other side.

Since the above incorrect segmentation occurs the more often the more interphase boundaries exist, the above problems intensify with complex multi-phase samples, as well as with samples with higher heterogeneity. A lower ratio between grain/particle size and voxel size naturally also increases the proportion of voxels affected by the problems.

Thus, the known classification methods using tomography are prone to producing incorrect measurement results, since in these methods the grayscale value of a voxel does not only depend on the phase present in the corresponding part of space, but also on further factors, like e.g. on the position of the voxel within the sample and on the neighboring voxels. Assigning voxels containing more than one phase/material correctly is therefore highly problematic in these methods.

Although it is possible to alleviate these problems by the correction methods briefly discussed above, it is not possible to apply a single correction function to the entire three-dimensional image. In contrast, correction - if possible - is applicable only voxel per voxel, and is therefore extremely time consuming.

An object of the present invention is therefore to provide a method and an analysis device for analyzing particulate materials by use of tomographic imaging that is less affected by the aforementioned problems. In particular, it is sought for an analysis that is free from image segmentation problems (problems 4) and 5) above) and for a reduction of image reconstruction problems (problems 1) to 3) above).

The above object is solved by the claimed subject-matter, which defines the present invention.

In particular, a method for analyzing particulate materials comprises: embedding particles of the particulate material in a spacer to form a sample in which the particles are dispersed; generating a three-dimensional image of the sample by tomography, in which the image is formed by voxels having greyscale values corresponding to the degree of absorption of radiation used for the tomography; and determining properties of the particles by separately analyzing for each analyzed particle the voxels representing the analyzed particle. Here, the spacer absorbs the radiation used for tomography differently, i.e. with a different attenuation coefficient, than the particles and the particles are preferably dispersed such that at least 20% of the particles in the sample are in at least 80% of the particle surface separated by at least 3 to 5 times a voxel size from each other.

The analysis contrasts therefore to the known analysis methods by two connected features. First, the particulate material is not subjected to tomography without preparation, but its particles are mixed with a spacer such as to sufficiently separate the particles from each other. As spacer a substance is used that is (substantially) transparent for the used tomography radiation or whose attenuation coefficient is sufficiently different to the attenuation coefficient of the analyzed particles to not affect the visibility of the particles in tomography. The spacer may also be formed from a particulate material.

By this embedding of particles into the spacer a sample is formed with increased homogeneity. For example, due to the embedding in the spacer each radiated cross-section of the sample may have a similar total attenuation coefficient, i.e. will lie within a maximum deviation of 50% from the average total X-ray attenuation of all cross-sections.

Thereby, beam hardening problems are substantially avoided, since the same correction function can be applied over the entire, substantially homogenous sample. Beam hardening on the separated particles is on the one hand small due to the small size of the particles, and cancels on the other hand out due to the reconstruction of the three-dimensional image from sectional images captured from different viewpoints.

Further, partial volume effects and cone beam blurriness effects are reduced by separating the particles from each other, which means that any voxel will contain only information about maximally one particle, but not of several distinct particles. The exact size of separation between particles that is necessary to achieve this depends on the specific particulate material to be analyzed. However, it has shown that typically a separation of about three to five times the voxel size or more produces a sufficient separation of the particles to result in a homogenous sample with reduced partial volume and cone beam blurriness effects.

Of course, it is sufficient, if this separation is present for a sufficiently large number of particles, i.e. for more than 10%, 20%, 30%, or 50%. Further, two particles may be located such that for some of the voxels of the surfaces of the respective particles, the distance between the particles is smaller than the above value. For example, it is sufficient, if more than 70%, 80% or 90% of the voxels of particle surfaces of two neighboring particles are separated by more than three to five times the voxel size from each other.

A second contrast to the known analysis methods that is enabled by the separation of particles is that instead of using segmentation algorithms to separate phases within the entire particulate material, properties of each particle are determined based on, but not limited to, the grayscale values of those voxels in which the particle is present. This has the advantage that the analysis of greyscale values is reduced to a one-particle problem, which eases the analysis considerably.

Further, knowledge about the particles within the sample can be used to supplement the grayscale value analysis in order to produce more accurate results. Such knowledge can e.g. be obtained from outside, i.e. from other measurements usually carried out in parallel in a sample classification process, and may relate to the elements or materials in the sample, to their concentration, and/or to their composition. Additional knowledge about the particles can also be derived from an analysis of the overall three-dimensional image, and relate e.g. to an overall greyscale correction, typical particle geometries and the like. Also, insight into the phases of one particle can be obtained from the analysis of the greyscale values belonging to one or a plurality of other particles in the sample.

It is therefore possible to provide a highly individual classification of particle phases in the sample that is, however, not dependent on a correction of the entire three-dimensional image on a particle-by-particle basis, but on the analysis, and if necessary, correction of the greyscale values of a single particle. This avoids the aforementioned typical phase segmentation problems, reduces the complexity of the correction, and allows taking into account additional information for phase classification of particles when necessary.

In determining the properties of the particles for each analyzed particle a histogram of grayscale values of the voxels representing it is formed, histograms obtained in this manner are classified into single-peak histograms and multi-peak histograms. Single-peak histograms are used to determine the phases in the corresponding particles. Here, the histograms indicate the number of voxels having a particular greyscale value over the different greyscale values.

It can be assumed that a single phase particle will be represented by voxels that have greyscale values that are grouped around a value, which corresponds to the attenuation or absorption coefficient of the single phase for the used radiation. For example, greyscale values may lie in a narrow range of values with a somehow normal distribution. Since there is only this single phase within the particle, no other greyscale values will be present in the corresponding voxels. Accordingly, particle phases can be classified by generating histograms of the greyscale values of (all or some) particles within the sample. Those histograms showing only a single peak belong to particles having only a single phase, and can therefore be used to determine the properties of this particle. Thus, a first part of the particles within the sample can be easily classified.

Determining particle properties from single-peak histograms is based on calibration data, in particular on knowledge about the particle content of the particulate material obtained from additional measurements, preferably from additional chemical or solid phase analysis (like mineralogical analysis or the like) of the particle content or from use of reference materials. Using calibration data like a table for grayscale values obtained for radiation absorption by different materials or their phases, peaks in the single-peak histograms can be directly assigned to specific materials. The same is true for peaks in a histogram that are clearly distinguishable, i.e. that are not overlapping. Thus, in this case obtaining distinguishable peaks is the only necessary step for determining the properties of the corresponding particle, since knowing the peak means knowing the material/phase. Further, also additional data can be used to assign single peaks to a specific material/phase. If one knows e.g. which elements and/or materials are contained in the particulate material, one can deduce relative peak positions from the physical properties of the materials. Knowing e.g. concentrations of elements and/or materials allows an estimate on the probability that a certain peak belongs to one of these elements/materials. In particular, if single-peak histograms of different particles are present that have different peaks, a one-to-one assignment of peaks to elements/materials is possible without specific calibration data.

The properties of particles corresponding to multi-peak histograms can be determined by correcting the multi-peak histograms by using single-peak histograms such that greyscale values not corresponding to a peak present in a single-peak histogram are reassigned to greyscale values corresponding to one of the peaks present in a single-peak histogram by using an interpolation function between the peaks present in a single-peak histogram.

After having obtained grayscale histograms of a large number of particles there is a high probability that each material present in the particulate material constituted a single phase particle. Thus, a series of single-peak histograms will be produced that show all the peaks corresponding to the present materials. It is then possible to determine in multi-peak histograms those peaks corresponding to the peaks of the single-peak histograms (correct peaks).

The number of voxels having greyscale values that do not belong to one of these correct peaks must then be assumed to be produced by image artefacts mentioned above, in particular to partial volume and cone beam blurriness effects occurring within a single multi-phase particle (and on its boundary). This number of voxels belonging to incorrect peaks must be partly assigned to the correct peaks in order to obtain a reliable classification. This is done by an interpolation function, which can either be obtained by calibration or by using a mathematical model that is based on prior knowledge of materials within the sample (e.g. from additional measurements), on the particle geometry known from the tomography, or the like.

Thus, by using additional information beyond the mere greyscale histogram a reliable classification of multi-phase particles can be obtained without the need of overly complicated and possibly inaccurate correction algorithms.

The properties of particles corresponding to multi-peak histograms can alternatively or additionally be determined by correcting the multi-peak histograms by separating the multiple peaks in these histograms into correct peaks and incorrect peaks by using a peak threshold, and by reassigning greyscale values of the incorrect peaks to greyscale values corresponding to one of the correct peaks by using an interpolation function between the correct peaks.

Thus, instead of using knowledge of single-peak histograms or in order to add to such knowledge, correct peaks in multi-peak histograms can be determined by using appropriate thresholds on the peaks. For example only peaks of a certain height or a certain absolute voxel number will be assumed to be correct peaks. The used thresholds depend on the particulate material and its composing phases or the class of particles to be analyzed and need to be set in a standard manner by calibration. Once the peaks are divided into correct and incorrect peaks the number of voxels of the incorrect peaks is assigned to the correct peaks by an interpolation function as was described above.

This allows classification of multi-phase particles even if there are no single-peak histograms or if the set of single-peak histograms does not represent all materials in the particulate material.

The properties of particles corresponding to multi-peak histograms can alternatively or additionally be determined by correcting the multi-peak histograms by using calibration data, in particular knowledge about the particle content of the particulate material obtained from additional measurements, preferably from additional chemical or solid phase analysis of the particle content, to determine the position of correct peaks and by reassigning greyscale values of peaks different from correct peaks to greyscale values corresponding to one of the correct peaks by using an interpolation function between the correct peaks.

Instead of data obtained from the greyscale values of the three-dimensional image itself it is also possible to rely on external measurement data. For example, if it is known from other measurements which materials are present in the sample and which greyscale values these materials will produce in the tomography, it is possible to assign all voxels to these peaks. This can be used to cross-check during calibration results obtained by the aforementioned methods. Further, if the voxel size is comparable to the particle size or the size of single phases within a particle, no predominant peak for all materials will be produced in the multi-peak histograms. A correct assignment and classification is then still possible by taking additional measurement results into account that are usually produced anyhow in a particulate material classification. Accordingly, the present method can also produce reliable results for particle sizes in the range of the voxel sizes.

The grayscale values of the voxels may be corrected based on the overall distribution of grayscale values and/or based on geometrical properties of the particles obtained from the three-dimensional image. Thus, the overall distribution of grayscale values may suggest that a shift of certain grayscale values is necessary in order to correct e.g. for beam hardening or the like. Further, geometrical properties such as the thickness or roundness of particles may lead to a correction of grayscale values, like e.g. adaption of grayscale values of thin portions of a particle to grayscale values of the particle bulk. Thus, by using additional information obtainable directly from the captured greyscale value the histogram based particle-per-particle classification can be further improved.

In embedding the particulate material into the spacer the volume ratio of the particulate material within the sample may be adjusted to be below 60 %, e.g. to be between 15 % and 25%, and is preferably 20 %. Further, the spacer may contain particles having a size between 0.2 times the minimum size of the particles in the particulate material and 2.5 times the maximum size of the particles in the particulate material. Each of these measures ensures that in the produced sample the particles of the particulate material are sufficiently separated from each other. Further, smaller spacer particles can more efficiently prevent that the single particles of the particulate material touch each other, while larger spacer particles avoid settling. Thus, the sample can be formed according to the needs of the analysis.

The sample may be formed by mixing the spacer and the particulate material in a liquid material that is solidified to have a cylindrical shape. The liquid material may be saturated with the particles and the spacer. For example, spacer particles and particles of the particulate material may be mixed in a curable resin, like e.g. a polymerizing resin. Giving the hardened sample a cylindrical shape makes the sample homogeneous to radiation from all directions encircling the cylinder. Further, saturating the liquid material can prevent settling of the particles within the sample, which also increases the homogeneity of the sample and thus reduces the detrimental effects of beam hardening.

An analysis device for analyzing particulate materials according to one of the aforementioned methods may comprise a tomography device for obtaining three-dimensional images of an object and a computing device configured to carry out one of the aforementioned methods. In particular, the computing device may be configured to cause the tomography device to generate a three-dimensional image of a sample that is formed by embedding particles of the particulate material in a spacer and in which the particles are dispersed, which image is formed by voxels having greyscale values corresponding to the degree of absorption of radiation used for the tomography, wherein the spacer absorbs the radiation used for tomography differently from the particles, and the particles are preferably dispersed such that at least 20% of the particles in the sample are in at least 80% of the particle surface separated by at least 5 times a voxel size from each other. The computing device being further configured to determine properties of the particles, by separately analyzing for each analyzed particle the voxels representing the analyzed particle. Such an analysis device allows therefore achieving the aforementioned advantages in classifying particulate materials by tomography.

Summarizing, problems related to beam hardening can be mitigated by optimal sample preparation, while usage of preliminary acquainted information about the sample facilitates to deal with partial volume and cone beam blurriness effects.

This enables the quantification of phases in particles without segmenting the phases from the entire three-dimensional image, thus avoiding the corresponding problems that were described above.

This is inter alia achieved by optimal sample preparation by aliquot particle dispersion, which makes the sample homogeneous and thus mitigates problems related to beam hardening. Scanning, reconstruction and three-dimensional image processing is optimized to allow individual particle analysis. This enables a particle-based phase classification, which divides the sample into smaller and easier to classify regions than is done in the known methods. Accordingly, corrections to imaging problems can be applied locally to each particle.

In the individual analysis of each particle, first all voxels in a particle are interpreted in order to identify the phases present in the particle, and to determine which voxels are affected by partial volume and cone beam blurriness effects. This interpretation may use preliminary information about the sample to avoid wrong phase classifications. Further, voxels that are identified as affected by imaging artefacts are corrected, thereby eliminating any phase overestimation or underestimation.

This allows quantification of a variety of properties of all particles in the sample by using the corrected classification of voxels, resulting in an improved classification with comparably low computational requirements.

The above described workflow is universal for any particles composition, size and geometry. Nevertheless, each step is flexible so that the conditions and parameters used may be optimized for a specific particle system. That means the workflow is semi-automatic, once calibrated and optimized for a given system the same level of accuracy is expected for new samples of the same type.

Here, it is important that the different steps of the workflow are optimized to analyze single particles. Further, usage of information of all voxels of the particle as well as the three-dimensional properties of the particle and additional information available about the material further improves the results. Compared to the known methods, the quantification is optimized to smaller volumes, i.e. to the particle level, and each small volume is in principle analyzed independent from the other volumes. At the same time the amount of criteria other than the greyscale values of the voxels that are used to classify and quantify the voxels in a specific sub-volume is increased.

The present invention will be described in the following in an exemplary manner with respect to the accompanying figures. It is to be understood that the following description serves only for clarification, but not for limitation. The present invention is only defined by the claimed subject-matter. Shown in
- **Fig. 1**: is a schematic process flow of a method for analyzing particulate materials;
- **Fig. 2**: is an overview over different steps in a method for analyzing particulate materials;
- **Fig. 3**: are representations of tomographic images of two different particle samples;
- **Fig. 4**: is a graph showing greyscale values of the particle samples of Fig. 3;
- **Fig. 5**: are graphs showing greyscale value histograms of different particles within a particulate material;
- **Fig. 6**: are graphs showing greyscale value histograms of a multi-phase particle before and after correction;
- **Fig. 7**: are graphs showing greyscale value histograms of a multi-phase particle before and after correction; and
- **Fig. 8**: is a schematic illustration of an analysis device for analyzing particulate materials.

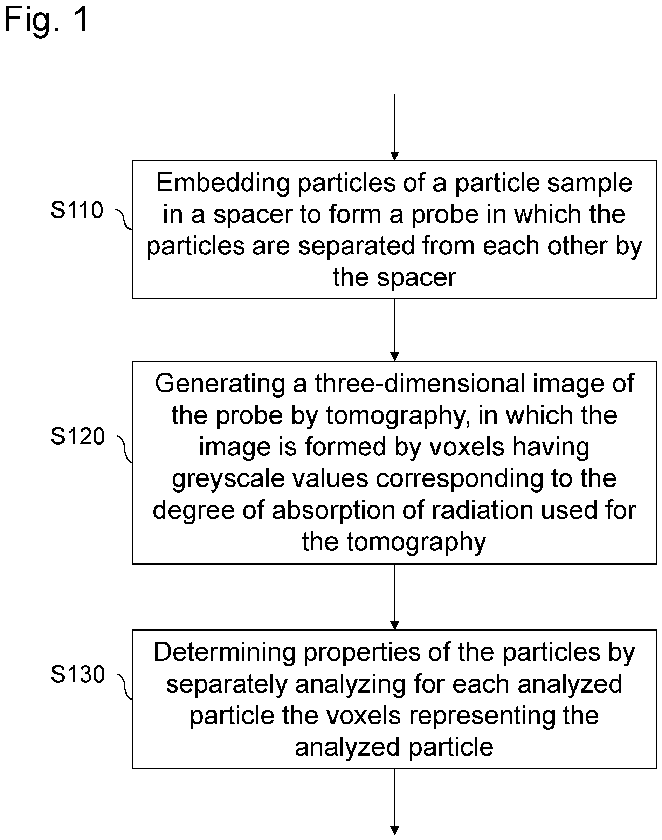

Fig. 1 shows a schematic process flow of a method for analyzing a particulate material. At S 1 10 particles of the particulate material are embedded in a spacer to form a sample in which the particles are homogeneously dispersed and separated from each other by the spacer. At S 120 a three-dimensional image of the sample is generated by tomography, in which the image is formed by voxels having greyscale values corresponding to the degree of absorption of radiation used for the tomography. At S130 properties of the particles are determined by separately analyzing for each analyzed particle the voxels representing the analyzed particle. Here, the used spacer absorbs the radiation used for tomography differently than the particles and the particles in the sample are preferably separated by at least 5 times a voxel size from each other.

Thus, as described in the introductory portion a spacer (which is e.g. transparent for the radiation type used in the tomography) is used to separate particles in a particulate material from each other. This makes the resulting sample more homogeneous and allows an analysis of each of the separated particles based on the greyscale values of the respective particle. For example, due to the embedding in the spacer each cross-section of the sample, e.g. each section through a cylinder at a different height, may have a similar total attenuation coefficient, i.e. will lie within a maximum deviation of 50% from the average total X-ray attenuation of all cross-sections. By the homogeneous sample beam hardening problems are mitigated. Further, because the particles are more homogeneously dispersed, the greyscale value of a particular phase will always be the same independent of the position of the particle within the sample. By the particle-per-particle analysis partial volume and cone beam blurriness effects can be treated more easily. Further, phase segmentation of phases in different particles is not necessary. Instead, the single-particle approach allows supplementing and refining the greyscale value analysis with additional data obtained either from the overall three-dimensional image or from additional measurements on the particulate material.

The method links thereby sample preparation, scanning, reconstruction and image analysis to optimize analysis of the phases of individual particles. Accordingly, the dilemma of phase classification across the entire sample is split into local classifications that are easier to handle and whose results can be more easily interpreted.

Additionally, the classification of phases integrates information of all the voxels in an individual particle, and can be supplemented with preliminary gathered knowledge about the sample, instead of using image segmentation techniques on the entire three-dimensional image.

Particular features not used in prior classification methods are inter alia:
- an optimized workflow for segmentation and processing of single particles;
- an optimized sample preparation that uses a spacer fraction that imposes spatial distance between particles, and homogenizes particle distribution within the scanned volume;
- the possibility of a histogram based correction of greyscale values that is executed to classify and quantify individual particles instead of using corrections applied to the histogram of the entire sample;
- a phase classification that uses an interpretation of all voxels within each particle as opposed to a comparison of neighboring voxels used in some prior art methods;
- the possibility to use preliminary gathered knowledge about the sample that is used in the interpretation of a particle's composition as well as of the measured three-dimensional geometrical properties of particles, instead of using only the greyscale values of the voxels as classification criteria;
- a quantification based on the histogram of individual particles instead of using image processing to segment the phases that are then quantified individually as binary images;
- the possibility to set up a semi-automated workflow that can be optimized for specific tomographic systems and sample types in a simpler way than any of the available solutions.

Thereby problems 1) to 5) as described above can be efficiently handled without an excess of computing resources or the like. Further, a plurality of additional positive effects can be provided within the method for particle classification.

Compared to prior classification methods an improved contrast resolution between phases can be established that allows accurate phase classifications. This is in particular achieved by smaller ranges of greyscale values that identify each phase due the local analysis of greyscale values of the single particles, which is realized by optimized sample preparation and the possible use of preliminary acquired knowledge for the interpretation of greyscale values of the voxels of a single particle.

Further, a listing of the full properties of individual particles is enabled due to the optimization of the workflow for individual particles. In particular, the usage of the correct amount of spacer of the right size to separate the individual particles allows the particle-by-particle analysis.

Also, three-dimensional properties of the individual particles can be quantified more reliable, since phase segmentation is not required, and the corresponding problems do not occur. Additionally, by the possibility to use preliminary information about the sample the validity of the used interpretation of greyscale value criteria can be checked.

Once set up, the method can be optimized fast and adjustable to a specific material. The rules used to interpret a material can be easily transferred to interpret other materials by tuning the ranges of greyscale values to the phases of the other material, and by optimizing the set of criteria used to classify the phases in a particle by switching specific criteria on and off.

The accuracy of the analysis can be enhanced by preliminary acquainted knowledge about the sample. For example, if a comprehensive description of two-dimensional or bulk properties of the material exists and is used, the quantification of three-dimensional properties by the method is accurate within the resolution of the scanner.

The method has further the potential to automate and standardize each stage of the workflow in order to make its value competitive for large scale implementation of three-dimensional imaging as characterization technique in different industries. In particular, the universal work-flow of the method enables semi-automated three-dimensional characterization of particle properties with highly complex microstructures.

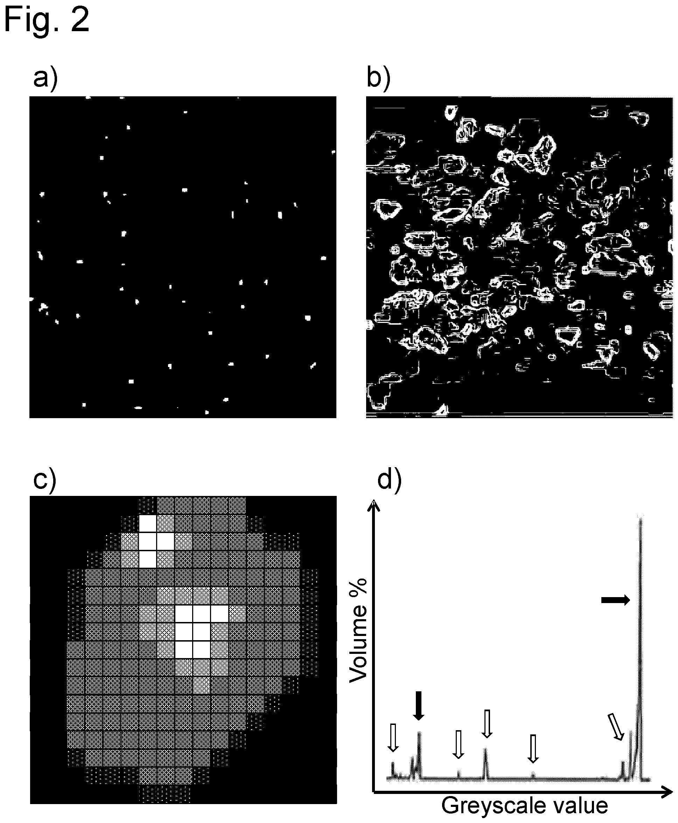

The overall process flow of the above analysis method can also be represented as shown in Fig. 2. Fig. 2a) shows the result of sample preparation. Here, a spacer of proper size and ratio is mixed with the particulate material. The particles are thereby embedded in a matrix that contrasts with them. In this manner a sample containing homogeneously dispersed and separated particles is generated. A specific example might e.g. be electronic waste (bright points in Fig. 2a)) that is embedded in a less X-ray attenuating matrix of organic spacer and epoxy resin (black background in Fig. 2a)).

This homogenized sample is then scanned and a three-dimensional image is reconstructed, a section through which is shown in Fig. 2b). As described above, in this three-dimensional image imaging artefacts are minimized and the contrast between different phases in the sample/the particles is enhanced, due to the separation of the particles from each other.

A sectional view through a single particle is schematically shown in Fig. 2c) where the voxels of a single particle with (highly schematic) different greyscale values are indicated. The example of Fig. 2c) shows a particle with two phases, one leading to bright voxels, while another one leading to dark voxels. Further, transition greyscales can be observed in voxels at the particle boundary and at voxels covering interphases. From the entirety of single particle images classification criteria can be established, e.g. by using the distribution of greyscale values in different particles, or the geometrical properties of the particles obtainable from the three-dimensional image. Further, preliminary knowledge from additional measurements or the like can be used to refine the classification.

The quantification can be based on greyscale histograms of each particle, one of which being exemplary shown in Fig. 2d). These histograms indicate the number of voxels having a particular greyscale value over the different greyscale values. The number of voxels can be normalized by the voxels covering the particle to give an indication of volume %. The histogram shown in Fig. 2d) has two main (or correct) peaks (black arrows), and a number of peaks stemming from artefacts (incorrect peaks, white arrows). A quantification of such a two-phase particle (as the one shown in Fig. 2c)) is only possible by using appropriate criteria which will be detailed below. For example, bulk properties, surface properties or phase association in the particulate material, the geometry of the analyzed particle or the individual particle statistics might be used.

So, the steps leading to a sample as shown in Fig. 2a) include an optimal sample preparation procedure in order to minimize on the one hand artefacts and separate on the other hand the particles from each other, which guarantees that the greyscale values of different particles are comparable independently of their location within the sample. To this end, a homogeneous dispersion of particles is created that are kept in place in a solid matrix that has preferably a cylindrical shape. This cylindrical shape has the additional advantage that the overall energy of X-rays along each cross section of the sample is similar, which makes beam hardening homogeneous in every particle.

Therefore, the sample preparation minimizes beam hardening, so that known correction methods can be applied more efficiently. Moreover, the particle-per-particle analysis is enabled by the correct preparation.

Here, every particle should preferably be separated from all its neighbor particles by a distance of at least 5 times the voxel size. This eases the labelling of individual particles with minimum image processing that could damage the particles boundaries, and assures that the greyscale values of particles are independent from the values of their neighbor particles. This might be achieved by mixing the particles of the sample with particles of a spacer using for example a ratio of about 20 v/v% sample to 80 v/v% spacer. The size range of the spacer particles should be between 0.2 and 2.5 times the average size of the sample particles. While smaller spacer particles prevent the sample particles to touch each other, larger spacer particles avoid settling. Sample and spacer are preferably mixed with a liquid material, like e.g. polymerizing resin, that when solidified keeps the particles and spacer in place. The dispersion material and the spacer must have an attenuation coefficient for the tomography radiation that is significantly different from the one of the material under analysis. For example, for a silicate based sample analyzed by X-rays, one could use plastic, sugar, or other carbon based material as spacer. To prevent settling, the dispersion medium should be saturated with particles during particle mixing.

After preparation the sample is scanned to produce a three-dimensional image as shown in Fig. 2b). Here, optimal scanning, reconstruction and image processing algorithms that are in principle known to a skilled person should be used in order to maximize contrast between the phases present in a sample and to minimize imaging artefacts. Here, conditions and parameters that are used should be kept constant between samples to obtain comparable results in the next steps of the workflow. Image analysis might also be optimized with respect to the particle system, e.g. to the material composition and particle size and shape. Watershed methods and artificial intelligence may be used for semi-automatic segmentation and labeling of individual particles in the three-dimensional image. As such algorithms are in principle known to a skilled person description of them can be omitted here. To simplify the analysis of individual particles, regions having similar greyscale values (such as grains within particles) may be created by removing noise and minimizing gradients using per se known image processing filters. The result is a three-dimensional image in which each particle is identified by a unique label and represented by a number of voxels, each of which having a single greyscale value.

An example of such a particle is shown in Fig. 2c). Each of these single particles will then be subjected to analysis and - if necessary - correction of the greyscale values of its voxels. Here, to classify each voxel the content of the voxel may not only be interpreted using its greyscale value, but also according to further specific criteria that can be optimized for each sample. These criteria can be based on, for example, an interpretation of the greyscale value of all voxels in the particle, the properties of the particle extracted from the three-dimensional image, and preliminary knowledge about the material (e.g. phase association, shape and size) obtained from parallel measurements.

For example, the greyscale values of voxels corresponding to small grains and to particles that are only a few voxels thick are lower than the greyscale values of voxels of the same phase in a thicker particle due to partial volume and cone beam blurriness effects. In this case, the geometrical properties of the particle as known from the three-dimensional image can be used as criteria to better classify the greyscale values of voxels in such a particle.

After classifying the greyscale values of all voxels of a particle, the phases in a particle are identified and quantified according to the criteria. Thus, traditional direct image segmentation is not required, and the possible quantification errors present in this biased step can be avoided.

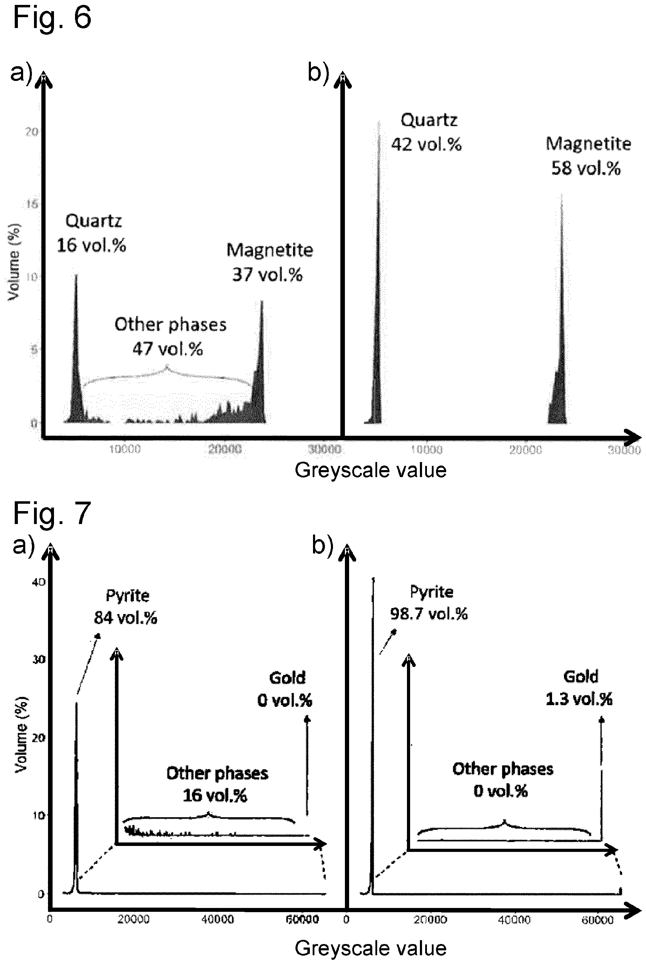

As an example of classification, histogram based criteria can be used, since each peak of the histogram represents the volume (number of voxels) in a particle that corresponds to grains within an interval of greyscale values (i.e. to a specific phase). Additionally, a more comprehensive list of criteria can be elaborated if the material has been characterized by other methods, which would result in higher accuracy and lower detection limits. For example, at this point, each particle is represented by voxels identified as containing the detected phases and by voxels that contain some mixture of the previously identified phases. In voxels representing more than one phase, the proportion of each phase may be calculated by using the greyscale value of the voxel and an interpolation between the phases expected in the voxel to correct the volume of each of the phases present in the voxel. A more detailed description how to do this will be given below with reference to Figs. 6 and 7.

Based on the classification of all voxels of each single particles, e.g. by a greyscale value histogram as shown in Fig. 2d), the three-dimensional properties of all particles can be quantified, including the quantification of the phases in all voxels of each particle. In particular, voxels identified as a single phase attribute with 100% of the voxel's volume to that phase. Voxels identified as containing two or more phases are quantified individually according to specific criteria defined based on the greyscale value, and possibly by preliminary knowledge about the sample from parallel measurements.

For example, if two phases in a particle are identified, the voxels at the interphase between the phases are affected by partial volume effect, which results in voxels having greyscale values between the ranges of the two phases. Thus, the volume of these voxels should be distributed to the two phases in a proportion defined by the greyscale values of each voxel.

A comprehensive analysis of the three-dimensional properties of the particles can be achieved with a quantification optimized to a specific type of analysis, such as e.g. bulk analysis, surface analysis and association between phases. At the end of the process, a complete quantitative description of every particle within the sample can be obtained.

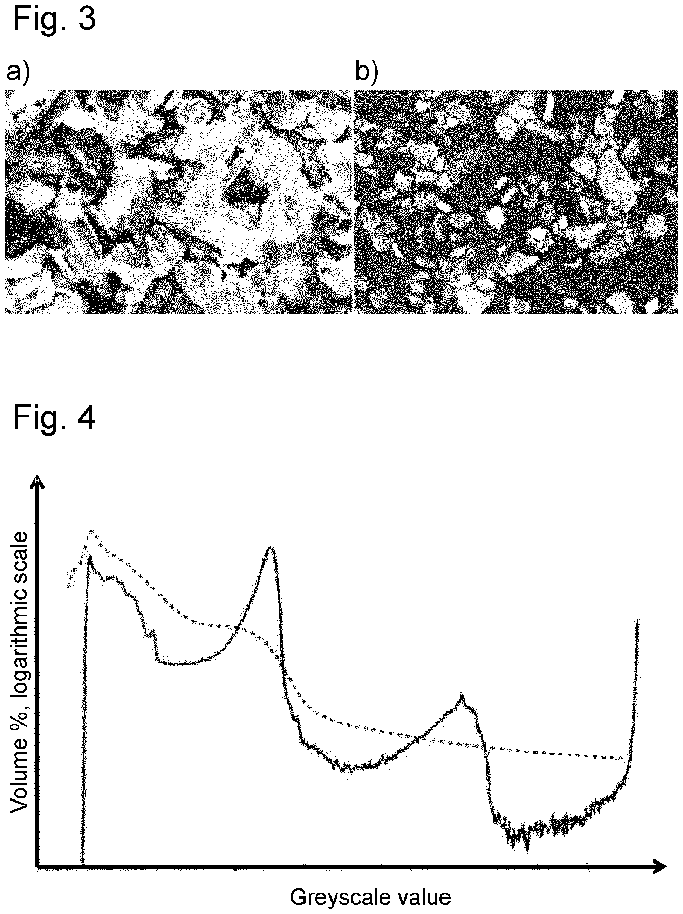

As mentioned above, preparation of the sample is important for obtaining these results. Figs. 3 and 4 give additional insights in the positive effects of the sample preparation. Fig. 3a) shows a section trough a three-dimensional image of a particulate material without dispersion by a spacer, while Fig. 3b) shows a dispersed particle sample. The effect of dispersion is apparent, after dispersion the particles are clearly separated from each other.

The effect of this dispersion on a greyscale histogram of the entire three-dimensional image is shown in Fig. 4. Here, the dashed line shows greyscale values obtained without dispersion, while the continuous line refers to the greyscale values of the same sample using dispersion. Again, it is apparent that already from the entire three-dimensional image more features can be extracted from the greyscale values after the particles of the sample are dispersed.

Thus, it is evident from Figs. 3 and 4 that proper particle dispersion is beneficial in order to prevent particle agglomeration into a packed structure that hampers distinguishing individual particles. The histogram corresponding to particles without dispersion shows very broad bands where the range of grey-values corresponding to some phases is indistinguishable.

Contrastingly, the dispersed sample shows an increased homogeneity due to the separated particles. The resulting histogram shows that the ranges of greyscale values corresponding to each phase are narrower, and the peaks of individual phases are distinguishable.

However, the overlap between peaks in this histogram of the entire three-dimensional image is still too large to correctly classify voxels, which can be attributed to still remaining partial volume and cone beam blurriness effects. This shows the positive effects of an individual particle analysis as proposed herein, which improves in particular the contrast between phases.

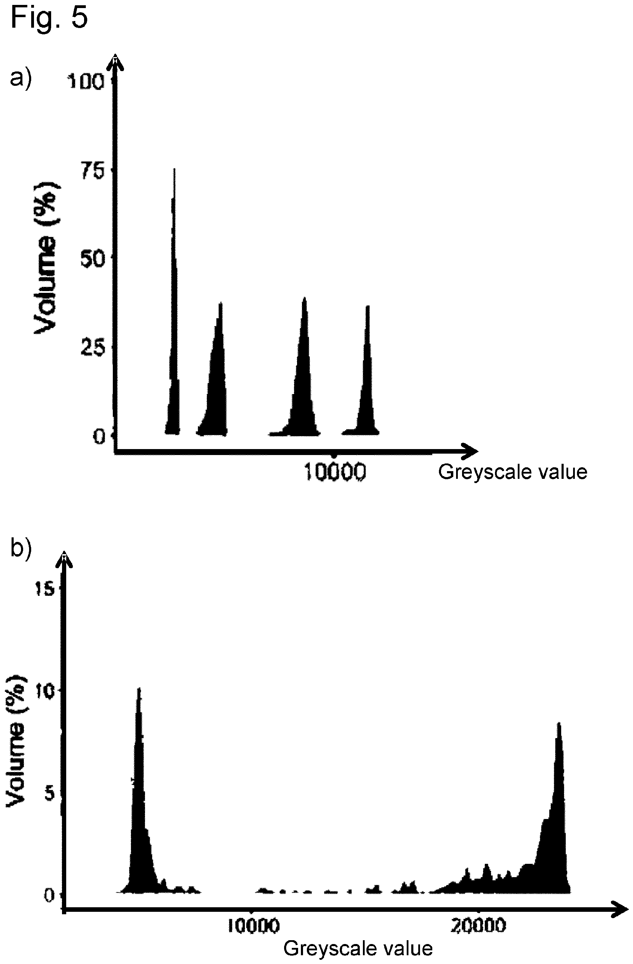

This improvement is illustrated in Fig. 5a), where single-peak histograms of four mono-phasic particles are shown as narrow peaks of greyscale values, each one corresponding to one specific phase. This allows a classification of single phase particles based on the corresponding single-peak histograms and demonstrates a gain in contrast resolution of the three-dimensional imaging method described herein.

Thus, all one-phase particles having a sufficiently large size to cover a large number of voxels can be identified and classified rather easily from their greyscale value histograms. For particles with more than one phase, interphase voxels are present that will have greyscale values outside of the position of the correct peaks representing the actually present phases in the particle. This is e.g. illustrated in Fig. 5b) where the histogram of a two-phase particle is shown. Here, the two large peaks correspond to the actually present phases (correct peaks), while the small peaks between them are incorrect peaks resulting from the interphase voxels.

Such interphase voxels will be attributed to the wrong phase if prior art methods are used. How it can be dealt with such multi-peak histograms will be described in the following with respect to Figs. 6 and 7.

Both of these figures refer to the correction of multi-peak histograms by reference to knowledge of the correct peaks, either from analysis of other single phase particles, from analysis of the peak distribution and shape of the multi-peak histogram or from knowledge obtained from external sources, like additional measurements on the analyzed sample.

Fig. 6 illustrates how partial volume and cone beam blurriness effects affect the phase identification at the interphase between grains inside a particle, and how these problems can be addressed. As an example, analysis of a particle containing magnetite and quartz will be discussed. A correct classification would only produce these two phases as a result.

However, due to partial volume and cone beam blurriness effects at the interphases between quartz and magnetite and between particle and background, voxels having transient shades of greyscale values will be present in the greyscale value histogram, too. Voxels unaffected by these problems will be present at the central region of each grain within the particle as voxels with approximately the same greyscale value. This is illustrated in Fig. 6a, where the two predominant peaks have to be assigned to the two actually present quartz and magnetite phases, while all other peaks are due to imaging artefacts.

Therefore, the main phases present in a multi-phase particle can be identified using the greyscale level of voxels in the central region of each phase. This is done by plotting the relative volume corresponding to voxels with the same greyscale value in the form of a histogram as illustrated in Fig. 6a). Higher peaks in the histogram will be caused by voxels with characteristic greyscale values that are related to a specific phase, which can then be used to identify them. Smaller peaks correspond to voxels affected by imaging artefacts that have transient greyscale values between correct phases, like the small peaks between two large peaks in the histogram of Fig. 6a).

A threshold can be used to define which voxels correspond to single phases, i.e. correct peaks, and which voxels correspond to a mixture of phases, i.e. incorrect peaks. This threshold can be optimized to the scan resolution, to the grain size and to the type of sample, i.e. by referring to information from the overall three-dimensional image or from external, parallel measurements. In particular, correct peaks might be identified by referring to peaks of single-phase particles that have already been classified.

Once the phases present in the particle have been identified, the voxels to be corrected can be easily determined, and specific criteria can be applied to assign the number of these voxels (or their corresponding volume within the particle) to the correct phases. In the example shown in Fig. 6, the volume of each of the voxels affected by partial volume and/or cone beam blurriness effects is partly assigned to quartz and the remaining part to magnetite. The parts are calculated using an interpolation function between the then known greyscale values of the two phases. Thresholds as well as interpolation functions can for example be determined during calibration of the method by e.g. using particulate materials having a known composition.

Quantifications with and without performing this correction show that over 47% of the particle's volume would have been wrongly classified and the quantification of quartz and magnetite would be inaccurate.

Additional criteria include refining the range of greyscale values that identify quartz and magnetite according to the geometry of the particle, and considering the interphases quartz vs. background and magnetite vs. background by measuring the surface area of each of the grains could further improve the quantification. Such geometrical and surface parameters are examples of particle properties obtainable from three-dimensional imaging.

A further difficulty arises, when the voxel size becomes comparable to the size of phases in a particle, since greyscale value peaks corresponding to such small phases/grains will not be predominant over artefact peaks. In this regard the discussed method can achieve a considerable improvement of spatial resolution that allows classifying and quantifying also such small phases.

This will be described with reference to Fig. 7, which shows in Fig. 7a) the greyscale value histogram of a particle containing small gold grains (i.e. a very dense material) inside pyrite (i.e. a lighter material). Due to the smallness of the gold grains voxels containing gold will most often also contain pyrite and do therefore not show the same greyscale value. Differently stated, due to the smallness of the grains, there is no central region with homogeneous greyscale values, in difference to the cases discussed with reference to Fig. 6.

That means if the grain size is too small relatively to the voxel size, the grains cannot be correctly classified from the greyscale values alone, i.e. without referring to additional information. The advantage of the discussed method is that such additional information can be used in the analysis without difficulties and might even be produced during analysis of all the particles within the sample.

In particular, if knowledge of the materials composing the sample is present, either from analysis of other particles within the sample or from additional parallel measurements of the same, the correct position of a peak resulting from small grains can be deduced. Further, due to the knowledge of the voxel resolution, the maximal size of such small grains can be estimated from the fact that no predominant peaks are formed therefrom, which gives an upper limit on the corrected peak size.

In the example of Fig. 7 it is known that gold represented by voxels not affected by partial volume or cone beam blurriness effects will have greyscale values of about 65,000. As shown in Fig. 7a) an uncorrected greyscale histogram does usually only show a sharp peak for the pyrite phase of a particle, but not a peak at or close to the grayscale value expected for gold. However, a plurality of small peaks occurs distributed at intensities higher than the pyrite peak. Such a distribution indicates that another phase having a higher density is present in the particle, but is too small to fill out enough voxels to create a correct peak.

But due to the knowledge about the presence of gold in the particulate material, one can assume that the denser material is formed of gold grains included in the pyrite. Thus to correct the greyscale histogram a correlation between the greyscale values of gold (known from analysis of other sample particles or from additional measurements on the particulate material) and pyrite is established. An interpolation function is then used just as in the case of Fig. 6 to reassign voxel numbers of the intermediate, incorrect peaks to the correct gold peak. The resulting corrected histogram is shown in Fig. 7b) and clearly identifies the two phases. The optimal interpolation function can again be obtained by calibration against a sample having a known composition.

Thus, also the quantification of phases distributed through grains with sizes below the voxel size can be improved by the discussed method.

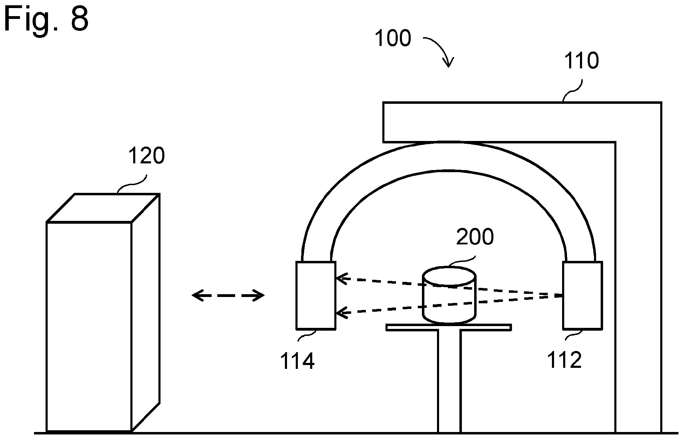

Fig. 8 shows a schematic representation of an analysis device 100 that can be used to carry out the methods described above. The analysis device 100 comprises a tomography device 110 and a computing device 120.

The tomography device 110 is capable to capture a series of images by circling a radiation source and a radiation detector around a preferably cylindrical sample 200 that has been prepared as described above. Here, any radiation that is suitable to create tomographic images can be used, such as X-rays, neutron or electron beams. Structure and functioning of the tomography device 110 are in principle known to a skilled person and do therefore not need to be detailed here.

The images obtained by the tomography device 110 are transmitted to the computing device 120, e.g. a processor, a personal computer, a laptop, a server farm, a computer network, a cloud computing system or the like. Here, the computing device 120 may also have caused the tomography device 110 to capture the images, and may be connectable to the tomography device 110 or may be an integral part of it.

The computing device 120 forms a three-dimensional image from the images captured by the tomography device 110 in a per se known manner. After the image has been formed, the computing device 120 carries out the particle analysis method described above based on the greyscale values of the voxels covering the single particles as has been described above. Thus, the analysis device is capable to produce an improved quantitative analysis of the particulate material.

## Claims

1. A method for analyzing a particulate material, the method comprising:
embedding particles of the particulate material in a spacer to form a sample in which the particles are dispersed;
generating a three-dimensional image of the sample by tomography, in which the image is formed by voxels having greyscale values corresponding to the degree of absorption of radiation used for the tomography;
determining properties of the particles by separately analyzing, for each analyzed particle, the voxels representing the analyzed particle; wherein
the spacer absorbs the radiation used for tomography differently than the particles; and **characterized in that**,
in determining the properties of the particles:
for each analyzed particle a histogram of grayscale values of the voxels representing it is formed;
histograms obtained in this manner are classified into single-peak histograms and multi-peak histograms; and
single-peak histograms are used to determine the properties of the corresponding particles.

2. The method according to claim 1, wherein
the particles are dispersed such that at least 20% of the particles in the sample are in at least 80% of the particle surface separated by at least 5 times a voxel size from each other.

3. The method according to claim 1 or 2, wherein
determining particle properties from single-peak histograms is based on calibration data, in particular on knowledge about the particle content of the particulate material obtained from additional measurements, preferably from additional chemical or solid phase analysis of the particle content, or using reference materials.

4. The method according to one of the preceding claims, wherein
the properties of particles corresponding to multi-peak histograms are determined by correcting the multi-peak histograms by using single-peak histograms such that greyscale values not corresponding to a peak present in a single-peak histogram are reassigned to greyscale values corresponding to one of the peaks present in a single-peak histogram by using an interpolation function between the peaks present in a single-peak histogram.

5. The method according to one of the preceding claims, wherein
the properties of particles corresponding to multi-peak histograms are determined by correcting the multi-peak histograms by separating the multiple peaks in these histograms into correct peaks and incorrect peaks by using a peak threshold, and by reassigning greyscale values of the incorrect peaks to greyscale values corresponding to one of the correct peaks by using an interpolation function between the correct peaks.

6. The method according to one of the preceding claims, wherein
the properties of particles corresponding to multi-peak histograms are determined by correcting the multi-peak histograms by using calibration data, in particular knowledge about the particle content of the particulate material obtained from additional measurements, preferably from additional chemical or solid phase analysis of the particle content, to determine the position of correct peaks and by reassigning greyscale values of peaks different from correct peaks to greyscale values corresponding to one of the correct peaks by using an interpolation function between the correct peaks.

7. The method according to one of the preceding claims, wherein
the grayscale values of the voxels are corrected based on the overall distribution of grayscale values and/or based on geometrical properties of the particles obtained from the three-dimensional image.

8. The method according to one of the preceding claims, wherein
in embedding the particulate material into the spacer the volume ratio of the particulate material within the sample is adjusted to be below 60 %, preferably to be between 15 % and 25%, and is most preferably 20 %.

9. The method according to one of the preceding claims, wherein
the spacer contains particles having a size between 0.2 and 2.5 times the maximum size of the particles in the particulate material.

10. The method according to one of the preceding claims, wherein
the sample is formed by mixing the spacer and the particulate material in a liquid material that is solidified to have a cylindrical shape; and
the liquid material is saturated with the particles and the spacer.

11. An analysis device (100) for analyzing a particulate material, the analysis device (100) comprising:
a tomography device (110) for obtaining three-dimensional images of an object; and
a computing device (120) configured
to cause the tomography device (100) to generate a three-dimensional image of a sample (200) that is formed by embedding particles of the particulate material in a spacer and in which the particles are dispersed, which image is formed by voxels having greyscale values corresponding to the degree of absorption of radiation used for the tomography, wherein the spacer absorbs the radiation used for tomography differently than the particles, and
to determine properties of the particles by separately analyzing for each analyzed particle the voxels representing the analyzed particle, **characterized in that**,
in determining the properties of the particles the computing device (120) is configured to:
form for each analyzed particle a histogram of grayscale values of the voxels representing it;
classify histograms obtained in this manner into single-peak histograms and multi-peak histograms; and
use single-peak histograms to determine the properties of the corresponding particles.

12. The analysis device (100) according to claim 11, wherein
the particles are dispersed such that at least 20% of the particles in the sample are in at least 80% of the particle surface separated by at least 5 times a voxel size from each other.

## Patentansprüche

1. Verfahren zum Analysieren eines teilchenförmigen Materials, wobei das Verfahren aufweist:
Einbetten von Teilchen des teilchenförmigen Materials in einem Abstandshalter, um eine Probe zu bilden, in der die Teilchen verteilt sind;
Erzeugen eines dreidimensionalen Bildes der Probe mittels Tomographie, wobei das Bild mittels Volumenelemente mit Graustufenwerten entsprechend dem Absorptionsgrad einer für die Tomographie verwendeten Strahlung gebildet wird;
Bestimmen von Eigenschaften der Teilchen, indem für jedes analysierte Teilchen die das analysierte Teilchen repräsentierenden Volumenelemente separat analysiert werden; wobei
der Abstandshalter die für die Tomographie verwendete Strahlung anders als die Teilchen absorbiert; und **dadurch gekennzeichnet, dass**
beim Bestimmen der Eigenschaften der Teilchen:
für jedes analysierte Teilchen ein Histogramm von Graustufenwerten der dieses repräsentierenden Volumenelemente gebildet wird;
auf diese Weise erhaltene Histogramme in Histogramme mit einem einzigen Peak und Histogramme mit mehreren Peaks klassifiziert werden; und
Histogramme mit einem einzigen Peak verwendet werden, um die Eigenschaften der entsprechenden Teilchen zu bestimmen.

2. Verfahren nach Anspruch 1, wobei
die Teilchen so verteilt werden, dass zumindest 20 % der Teilchen in der Probe auf zumindest 80 % der Teilchenoberfläche durch zumindest das 5-Fache einer Volumenelementgröße voneinander getrennt sind.

3. Verfahren nach Anspruch 1 oder 2, wobei
das Bestimmen von Teilcheneigenschaften aus Histogrammen mit einem einzigen Peak auf Kalibrierungsdaten basiert, insbesondere auf der Kenntnis des Teilchengehalts des teilchenförmigen Materials, der aus zusätzlichen Messungen, vorzugsweise aus einer zusätzlichen chemischen oder Festphasen-Analyse des Teilchengehalts, oder unter Verwendung von Referenzmaterialien erhalten wird.

4. Verfahren nach einem der vorhergehenden Ansprüche, wobei
die Eigenschaften von Teilchen entsprechend Histogrammen mit mehreren Peaks bestimmt werden, indem die Histogramme mit mehreren Peaks unter Verwendung von Histogrammen mit einem einzigen Peak korrigiert werden, so dass Graustufenwerte, die einem in einem Histogramm mit einem einzigen Peak vorhandenen Peak nicht entsprechen, Graustufenwerten neu zugewiesen werden, die einem der Peaks entsprechen, die in einem Histogramm mit einem einzigen Peak vorhanden sind, indem eine Interpolationsfunktion zwischen den in einem Histogramm mit einem einzigen Peak vorhandenen Peaks verwendet wird.

5. Verfahren nach einem der vorhergehenden Ansprüche, wobei
die Eigenschaften von Teilchen entsprechend Histogrammen mit mehreren Peaks bestimmt werden, indem die Histogramme mit mehreren Peaks korrigiert werden, indem die mehreren Peaks in diesen Histogrammen unter Verwendung eines Peak-Schwellenwerts in korrekte Peaks und inkorrekte Peaks getrennt werden und indem Graustufenwerte der inkorrekten Peaks Graustufenwerten neu zugewiesen werden, die einem der korrekten Peaks entsprechen, indem eine Interpolationsfunktion zwischen den korrekten Peaks verwendet wird.

6. Verfahren nach einem der vorhergehenden Ansprüche, wobei
die Eigenschaften von Teilchen entsprechend Histogrammen mit mehreren Peaks bestimmt werden, indem die Histogramme mit mehreren Peaks unter Verwendung von Kalibrierungsdaten korrigiert werden, insbesondere der Kenntnis des Teilchengehalts des teilchenförmigen Materials, der aus zusätzlichen Messungen, vorzugsweise aus einer chemischen oder Festphasen-Analyse des Teilchengehalts, erhalten wird, um die Position korrekter Peaks zu bestimmen, und indem Graustufenwerte von Peaks, die von korrekten Peaks verschieden sind, Graustufenwerten neu zugewiesen werden, die einem der korrekten Peaks entsprechen, indem eine Interpolationsfunktion zwischen den korrekten Peaks verwendet wird.

7. Verfahren nach einem der vorhergehenden Ansprüche, wobei
die Graustufenwerte der Volumenelemente basierend auf der Gesamtverteilung der Graustufenwerte und/oder basierend auf geometrischen Eigenschaften der Teilchen, die aus dem dreidimensionalen Bild erhalten werden, korrigiert werden.

8. Verfahren nach einem der vorhergehenden Ansprüche, wobei
beim Einbetten des teilchenförmigen Materials in den Abstandshalter das Volumenverhältnis des teilchenförmigen Materials innerhalb des Abstandshalters auf unter 60 %, vorzugsweise zwischen 15 % und 25 %, eingestellt wird und am bevorzugtesten 20 % beträgt.

9. Verfahren nach einem der vorhergehenden Ansprüche, wobei
der Abstandshalter Teilchen mit einer Größe zwischen dem 0,2- und 2,5-Fachen der maximalen Größe der Teilchen im teilchenförmigen Material enthält.

10. Verfahren nach einem der vorhergehenden Ansprüche, wobei
die Probe gebildet wird, indem der Abstandshalter und das teilchenförmige Material in einem flüssigen Material gemischt werden, das zu einer zylindrischen Form verfestigt wird; und
das flüssige Material mit den Teilchen und dem Abstandshalter gesättigt wird.

11. Analysevorrichtung (100) zum Analysieren eines teilchenförmigen Materials, wobei die Analysevorrichtung (100) aufweist:
eine Tomographievorrichtung (110), um dreidimensionale Bilder eines Objekts zu erhalten; und
eine Berechnungsvorrichtung (120), die dafür konfiguriert ist,
zu veranlassen, dass die Tomographievorrichtung (110) ein dreidimensionales Bild einer Probe (200) erzeugt, die gebildet wird, indem Teilchen des teilchenförmigen Materials in einem Abstandshalter eingebettet werden, und worin die Teilchen verteilt sind, welches Bild mittels Volumenelemente mit Graustufenwerten entsprechend dem Absorptionsgrad einer für die Tomographie verwendeten Strahlung gebildet wird, wobei der Abstandshalter die für die Tomographie verwendete Strahlung anders als die Teilchen absorbiert, und,
Eigenschaften der Teilchen zu bestimmen, indem für jedes analysierte Teilchen die das analysierte Teilchen repräsentierenden Volumenelemente separat analysiert werden, **dadurch gekennzeichnet, dass**
beim Bestimmen der Eigenschaften der Teilchen die Berechnungsvorrichtung (120) dafür konfiguriert ist:
für jedes analysierte Teilchen ein Histogramm von Graustufenwerten der dieses repräsentierenden Volumenelemente zu bilden;
auf diese Weise erhaltene Histogramme in Histogramme mit einem einzigen Peak und Histogramme mit mehreren Peaks zu klassifizieren; und
Histogramme mit einem einzigen Peak zu verwenden, um die Eigenschaften der entsprechenden Teilchen zu bestimmen.

12. Analysevorrichtung (100) nach Anspruch 11, wobei
die Teilchen so verteilt sind, dass zumindest 20 % der Teilchen in der Probe auf zumindest 80 % der Teilchenoberfläche durch zumindest das 5-Fache einer Volumenelementgröße voneinander getrennt sind.

## Revendications

1. Procédé d'analyse d'un matériau particulaire, le procédé comprenant :
l'incorporation de particules du matériau particulaire dans un espaceur pour former un échantillon dans lequel les particules sont dispersées ;
la génération d'une image tridimensionnelle de l'échantillon par tomographie, dans lequel l'image est formée de voxels ayant des valeurs de niveaux de gris correspondant au degré d'absorption du rayonnement utilisé pour la tomographie ;
la détermination de propriétés des particules en analysant séparément, pour chaque particule analysée, les voxels représentant la particule analysée ; dans lequel
l'espaceur absorbe le rayonnement utilisé pour la tomographie différemment des particules ; et **caractérisé en ce que**, pour déterminer les propriétés des particules :
pour chaque particule analysée, un histogramme de valeurs de niveaux de gris des voxels la représentant est formé ;
les histogrammes obtenus de cette manière sont classés en histogrammes à pic unique et histogrammes à pics multiples ; et
les histogrammes à pic unique sont utilisés pour déterminer les propriétés des particules correspondantes.

2. Procédé selon la revendication 1, dans lequel les particules sont dispersées de telle sorte qu'au moins 20 % des particules dans l'échantillon se trouvent dans au moins 80 % de la surface de particule séparées les unes des autres par au moins 5 fois une taille d'un voxel.

3. Procédé selon la revendication 1 ou 2, dans lequel
la détermination de propriétés des particules à partir d'histogrammes à pic unique est basée sur des données d'étalonnage, en particulier sur la connaissance de la teneur en particules du matériau particulaire obtenue à partir de mesures supplémentaires, de préférence à partir d'une analyse chimique ou en phase solide supplémentaire de la teneur en particules, ou en utilisant des matériaux de référence.

4. Procédé selon l'une des revendications précédentes, dans lequel
les propriétés des particules correspondant à des histogrammes à pics multiples sont déterminées en corrigeant les histogrammes à pics multiples en utilisant des histogrammes à pic unique de telle sorte que des valeurs de niveaux de gris ne correspondant pas à un pic présent dans un histogramme à pic unique sont réaffectées à des valeurs de niveaux de gris correspondant à l'un des pics présents dans un histogramme à pic unique en utilisant une fonction d'interpolation entre les pics présents dans un histogramme à pic unique.

5. Procédé selon l'une des revendications précédentes, dans lequel
les propriétés des particules correspondant à des histogrammes à pics multiples sont déterminées en corrigeant les histogrammes à pics multiples en séparant les multiples pics de ces histogrammes en pics corrects et en pics incorrects en utilisant un seuil de pic, et en réaffectant les valeurs de niveaux de gris des pics incorrects à des valeurs de niveaux de gris correspondant à l'un des pics corrects en utilisant une fonction d'interpolation entre les pics corrects.

6. Procédé selon l'une des revendications précédentes, dans lequel
les propriétés des particules correspondant à des histogrammes à pics multiples sont déterminées en corrigeant les histogrammes à pics multiples en utilisant des données d'étalonnage, en particulier des connaissances sur la teneur en particules du matériau particulaire obtenues à partir de mesures supplémentaires, de préférence à partir d'une analyse chimique ou en phase solide supplémentaire de la teneur en particules, pour déterminer la position des pics corrects et en réattribuant des valeurs de niveaux de gris de pics différents des pics corrects à des valeurs de niveaux de gris correspondant à l'un des pics corrects en utilisant une fonction d'interpolation entre les pics corrects.

7. Procédé selon l'une des revendications précédentes, dans lequel
les valeurs de niveaux de gris des voxels sont corrigées sur la base de la distribution globale des valeurs de niveaux de gris et/ou sur la base de propriétés géométriques des particules obtenues à partir de l'image tridimensionnelle.

8. Procédé selon l'une des revendications précédentes, dans lequel
lors de l'incorporation du matériau particulaire dans l'espaceur, le rapport en volume du matériau particulaire dans l'échantillon est ajusté pour être inférieur à 60 %, de préférence pour être entre 15 % et 25 %, et est de manière préférée entre toutes de 20 %.

9. Procédé selon l'une des revendications précédentes, dans lequel l'espaceur contient des particules ayant une taille entre 0,2 et 2,5 fois la taille maximale des particules dans le matériau particulaire.

10. Procédé selon l'une des revendications précédentes, dans lequel
l'échantillon est formé en mélangeant l'espaceur et le matériau particulaire dans un matériau liquide qui est solidifié pour avoir une forme cylindrique ; et
le matériau liquide est saturé avec les particules et l'espaceur.

11. Dispositif d'analyse (100) pour analyser un matériau particulaire, le dispositif d'analyse (100) comprenant :
un dispositif de tomographie (110) pour obtenir des images tridimensionnelles d'un objet ; et
un dispositif informatique (120) configuré
pour amener le dispositif de tomographie (110) à générer une image tridimensionnelle d'un échantillon (200) qui est formé en incorporant des particules du matériau particulaire dans un espaceur et dans lequel les particules sont dispersées, laquelle image est formée de voxels ayant des valeurs de niveaux de gris correspondant au degré d'absorption du rayonnement utilisé pour la tomographie, dans lequel l'espaceur absorbe le rayonnement utilisé pour la tomographie différemment des particules, et
pour déterminer des propriétés des particules en analysant séparément pour chaque particule analysée les voxels représentant la particule analysée, **caractérisé en ce que**
pour déterminer les propriétés des particules, le dispositif informatique (120) est configuré pour :
former pour chaque particule analysée un histogramme de valeurs de niveaux de gris des voxels la représentant ;
classer les histogrammes obtenus de cette manière en histogrammes à pic unique et histogrammes à pics multiples ; et
utiliser les histogrammes à pic unique pour déterminer les propriétés des particules correspondantes.

12. Dispositif d'analyse (100) selon la revendication 11, dans lequel
les particules sont dispersées de telle sorte qu'au moins 20 % des particules dans l'échantillon se trouvent dans au moins 80 % de la surface de particule séparées les unes des autres par au moins 5 fois une taille d'un voxel.
